# EUROPÄISCHE PATENTANMELDUNG

(11) **EP 4 344 530 A1**
(43) Veröffentlichungstag der Anmeldung: **03.04.2024**
(21) Anmeldenummer: 23186574.2
(22) Anmeldetag: 20.07.2023
(51) Int. Cl.: A01D 41/12, A01F 12/40, A01F 29/10, A01F 29/02

(54) **MÄHDRESCHER MIT ZERKLEINERUNGSEINRICHTUNG**

(30) Priorität: 19.09.2022 DE 102022123913
(71) Anmelder: CLAAS Selbstfahrende Erntemaschinen GmbH, 33428 Harsewinkel (DE)
(72) Erfinder: CLAES, Ulrich, 33790 Halle/Westf. (DE); ELPMANN, Manuel, 33154 Salzkotten (DE)
(74) Vertreter: CLAAS Gruppe

(57) **Zusammenfassung**

Ein Mähdrescher umfasst eine Trenneinrichtung (14) zum Trennen von Korn und Stroh und eine der Trenneinrichtung (14) nachgeordnete Zerkleinerungseinrichtung (17) zum Zerkleinern eines von der Trenneinrichtung (14) ausgegebenen Strohanteils (16). Die Zerkleinerungseinrichtung (17) umfasst einen Häckselrotor (2), der um eine quer zu einer Eintrittsrichtung des Strohanteils (16) in die Zerkleinerungseinrichtung (17) orientierte Achse (18) drehangetrieben ist, und dessen Drehbewegung einen von dem Häckselrotor (2) weg gerichteten Luftstrom erzeugt, wobei die Drehbewegung an einem Teil des Umfangs (21) des Häckselrotors (2) der Eintrittsrichtung entgegengesetzt ist,
dadurch gekennzeichnet, dass die Eintrittsrichtung des Strohanteils (16) in die Zerkleinerungseinrichtung (17) in der Weise geregelt ist, dass der Luftstrom dem Eintritt des Strohanteils (16) in die Zerkleinerungseinrichtung (17) nicht entgegenwirkt.

## Beschreibung

Die vorliegende Erfindung betrifft einen Mähdrescher mit einer Trenneinrichtung zum Trennen von Korn und Stroh und einer der Trenneinrichtung nachgeordneten Zerkleinerungseinrichtung zum Zerkleinern eines von der Trenneinrichtung ausgegebenen Strohanteils. Die Zerkleinerung begünstigt die Verrottung des Strohs, wenn dieses vom Mähdrescher auf eine soeben abgeerntete Ackerfläche ausgestreut wird.

Aus EP 1 232 683 B2 ist ein Mähdrescher bekannt, bei dem eine Zerkleinerungseinrichtung mit einem im Wesentlichen aus Kurzstroh und Spreu bestehenden Erntegutstrom aus einer Reinigungseinrichtung und einem im Wesentlichen aus Langstroh bestehenden Erntegutstrom aus einer Korn-Stroh-Trenneinrichtung beschickt wird. Die Zerkleinerungseinrichtung umfasst einen Häckselrotor, der um eine quer zu einer Eintrittsrichtung des Strohanteils in die Zerkleinerungseinrichtung orientierte Achse drehangetrieben ist.

Bei diesem herkömmlichen Mähdrescher ist ein Gutleitblech zwischen einer Stellung, in der es den Erntegutstrom aus Langstroh an der Zerkleinerungseinrichtung vorbei lenkt, und einer Stellung schwenkbar, in der es diesem Erntegutstrom den Weg an der Zerkleinerungseinrichtung vorbei versperrt. In dieser letzteren Stellung liegt dem Gutleitblech ein Auslass der Reinigungseinrichtung gegenüber, so dass das Langstroh von einem von der Drehung des Häckselrotors angetriebenen Luftstrom in die Reinigungseinrichtung getragen werden und deren Wirkung beeinträchtigen kann.

Wenn gegenüber dem Gutleitblech ein weiteres Leitblech vorgesehen wird, um dem Langstroh den Weg in die Reinigungseinrichtung zu versperren, ergibt sich das Problem, dass Teile des Langstrohs in einem Zwickel zwischen dem Gutleitblech und einem Umfangsabschnitt des Häckselrotors, der sich entgegengesetzt zur Laufrichtung des Strohs bewegt, in der Schwebe gehalten werden können und sich dort so lange Stroh sammeln kann, bis der sich bildende Strohklumpen schwer genug wird, um vom Häckselrotor erfasst und fortgerissen zu werden. Jedesmal, wenn dies geschieht und der Klumpen schlagartig zerkleinert wird, wird der Häckselrotor abrupt gebremst. Dies trägt erheblich zum Betriebsgeräusch des Mähdreschers bei. Außerdem muss der Häckselrotor schnell wieder beschleunigt werden, um, wenn der nächste Klumpen eingezogen wird, genügend kinetische Energie besitzen, um diesen zu durchschlagen. Dies macht eine hohe Antriebsleistung für den Häckselrotor erforderlich bzw. kann, wenn die Antriebsleistung nicht ausreicht, zu einer Blockade des Häckselrotors führen, zu deren Beseitigung der Betrieb des Mähdreschers unterbrochen werden muss.

Eine Aufgabe der vorliegenden Erfindung ist, einen Mähdrescher mit Zerkleinerungseinrichtung zu schaffen, bei dem Gutstauungen vermieden werden und ein kontinuierlicher Gutfluss sichergestellt ist. Als weitere Aufgaben der Erfindung kommen eine Reduzierung des Energieverbrauchs und des Betriebsgeräuschs in Betracht.

Die Aufgabe wird erfindungsgemäß gelöst, indem bei einem Mähdrescher mit einer Trenneinrichtung zum Trennen von Korn und Stroh und einer der Trenneinrichtung nachgeordneten Zerkleinerungseinrichtung zum Zerkleinern eines von der Trenneinrichtung ausgegebenen Strohanteils, wobei die Zerkleinerungseinrichtung einen Häckselrotor umfasst, der um eine quer zu einer Eintrittsrichtung des Strohanteils in die Zerkleinerungseinrichtung orientierte Achse drehangetrieben ist, und dessen Drehbewegung einen von dem Häckselrotor weg gerichteten Luftstrom erzeugt, wobei die Drehbewegung an einem Teil des Umfangs des Häckselrotors der Eintrittsrichtung entgegengesetzt ist, die Eintrittsrichtung des Gutstromes in die Nachzerkleinerungseinrichtung in der Weise geregelt ist, dass der Luftstrom dem Eintritt des Gutstroms in die Zerkleinerungseinrichtung nicht entgegenwirkt.

Insbesondere kann die Eintrittsrichtung durch ein einstellbares Gutleitblech geregelt sein, das einen von der Trenneinrichtung zur Zerkleinerungseinrichtung verlaufenden Kanal an einer Seite begrenzt.

Bei einem Häckselrotor mit in Querrichtung des Mähdreschers orientierter Achse ist im Allgemeinen die Drehrichtung so gewählt, dass eine untere Hälfte des Häckselrotors sich entgegen der Fahrtrichtung bewegt, um das Verstreuen des Häckelguts zu begünstigen. Dementsprechend bewegt sich eine hintere Hälfte des Häckselrotors aufwärts, und um das Stroh an der Klumpenbildung zu hindern, ist das Gutleitblech vorzugsweise an der bezogen auf die Fahrtrichtung des Mähdreschers hinteren Seite des Kanals vorgesehen.

Die Position des Gutleitblechs kann abhängig von der Beschaffenheit des Häckselguts, der Drehzahl des Häckselrotors, einer Arbeitsgeschwindigkeit der Trenneinrichtung und/oder einem Massenstrom geregelt sein. Wenn etwa die Halme des Häckselguts, sei es aufgrund von Trockenheit oder durch Art bzw. Sorte des Pflanzenmaterials bedingt, dazu neigen, in der Trenneinrichtung in kleine, leichte Bruchstücke zu zerfallen, die sich gut dazu eignen, am Eingang der Zerkleinerungseinrichtung in der Schwebe gehalten zu werden, kann es zweckmäßig sein, den Kanal durch das Gutleitblech besonders stark zu verengen. Auch ein niedriger Massenstrom oder eine hohe Arbeitsgeschwindigkeit der Trenneinrichtung können dazu führen, dass sich das Häckselgut auf einem Teil des Kanalquerschnitts konzentriert, wo es besonders zur Klumpenbildung neigt, sofern es nicht durch das Gutleitblech von diesem Teil fortgelenkt wird.

Die Verstellung kann insbesondere dadurch ermöglicht sein, dass das Gutleitblech um eine zur Achse des Häckselrotors parallele Achse schwenkbar ist.

In einer einfachen Ausgestaltung ist aber auch ein starr positioniertes Gutleitblech wirksam, das einen von der Trenneinrichtung zur Zerkleinerungseinrichtung verlaufenden Kanal an einer Seite, insbesondere einer bezogen auf die Fahrtrichtung des Mähdreschers hinteren Seite, begrenzt.

Dies gilt insbesondere dann, wenn der der Kanal auf einer zweiten Seite durch ein weiteres Leitblech begrenzt ist, das einer Ablenkung des Häckselguts quer zu dem Gutleitblech Grenzen setzt.

Um die Neigung zur Klumpenbildung wirksam zu vermindern, sollte der Abstand zwischen dem Gutleitblech und dem weiteren Leitblech bei einem starr positionierten Gutleitblech ständig, bei einem verstellbaren zumindest zeitweilig kleiner als der Durchmesser des Häckselrotors, vorzugsweise um mindestens 20 % kleiner, sein. Ein Abstand, der um mehr als 50% kleiner ist, ist nicht zweckmäßig, da eine Verengung über 50% hinaus die Gefahr der Klumpenbildung nicht mehr weiter reduziert, aber bei einem zu engen Kanal die Möglichkeit des Verstopfens besteht. Zweckmäßig ist eine obere Grenze von 30%.

Das Gutleitblech sollte sich über die gesamte Länge des Häckselrotors erstrecken, um über dessen ganze Länge hinweg zu wirken.

Um die nach oben gerichtete, das Schweben des Häckselguts über dem Rotor unterstützende Geschwindigkeitskomponente des Luftstroms ausreichend zu reduzieren, sollte das Rotorgehäuseblech an seinem an das Gutleitblech angrenzenden Rand eine Neigung von 30° bis 70°, vorzugsweise 40°-60° gegen die Vertikale aufweisen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Teil eines erfindungsgemäßen Mähdreschers in einer Seitenansicht bzw. einem schematischen Schnitt;
- Fig. 2: eine Zerkleinerungseinrichtung des Mähdreschers im Querschnitt; und
- Fig. 3: eine alternative Ausgestaltung der Zerkleinerungseinrichtung.

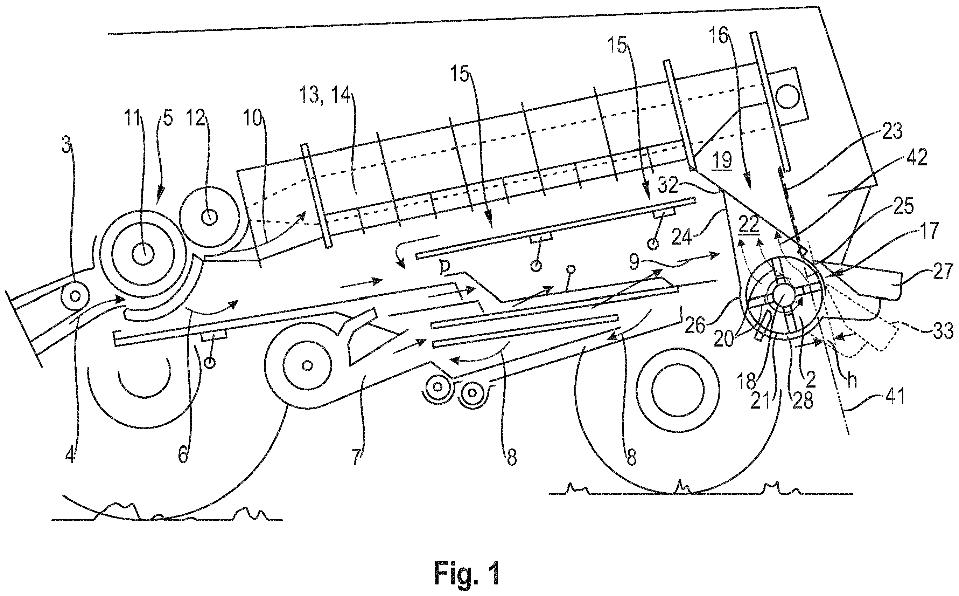

Fig. 1 zeigt einen Mähdrescher 1 schematisch dargestellt. An einer Vorderseite des Mähdreschers 1 ist ein hier nicht dargestellter Erntevorsatz montiert, der einen Strom 4 von rohem Erntegut über einen Schrägförderer 3 einem Tangentialdreschwerk 5 zuführt. In an sich bekannter und deshalb nicht näher erklärter Weise wird in dem Tangentialdreschwerk 5 ein erster intermediärer Erntegutstrom 6 abgeschieden, der im Bereich einer beliebig ausgeführten Reinigungseinrichtung 7 in einen im Wesentlichen aus Körnern bestehenden Erntegutstrom, im Folgenden als Kornanteil 8 bezeichnet, und einen im Wesentlichen aus Kurzstroh und Spreu bestehenden Erntegutstrom, im Folgenden vereinfachend als Spreuanteil 9 bezeichnet, entmischt wird.

Wenigstens ein weiterer intermediärer Erntegutstrom 10 wird von dem einen oder den Dreschorganen 11,12 einer im Ausführungsbeispiel als Axialflussrotor 13 ausgeführten Korn-Stroh-Trenneinrichtung 14 zugeführt. In dieser wird der Erntegutstrom 10 in einen Teilstrom 15 aus Korn, Kurzstroh und Spreu, der entlang des Axialflussrotors 13 über Mantelöffnungen desselben austritt und in der Reinigungsvorrichtung 7 mit dem ersten intermediären Erntegutstrom 6 zusammengeführt wird, und einen zweiten Erntegutstrom geteilt, der im Wesentlichen aus langhalmigem Stroh besteht und deshalb nachfolgend als Strohanteil 16 bezeichnet wird. Ein Auslassbereich 19, an dem der Strohanteil 16 aus dem Axialflussrotors 13 austritt, befindet sich an einem hinteren Ende desselben.

Eine Zerkleinerungseinrichtung 17 zum Häckseln des Strohanteils 16 ist unter dem Auslassbereich 19 angeordnet. Die Zerkleinerungseinrichtung 17 umfasst einen Häckselrotor 2, der um eine quer zur Fahrtrichtung FR des Mähdreschers 1 ausgerichtete Achse 18 in der Perspektive der Fig. 1 im Gegenuhrzeigersinn drehangetrieben ist, und ein Gehäuse mit Gehäuseabschnitten 25, 26 die sich, voneinander durch Ein- und Auslassöffnungen getrennt, auf einer im Wesentlichen zylindrischen Fläche um den Häckselrotor 2 erstrecken. Der Häckselrotor 2 umfasst eine zentrale Welle, an die eine Mehrzahl von Häckselmessern 20 jeweils um eine zur Achse 18 parallele Achse schwenkbar angelenkt sind. Wenn die Häckselmesser 20 unter dem Einfluss der Fliehkraft radial von der Achse 18 abstehen, beschreiben ihre äußeren Spitzen einen Kreis 21 um die Achse 18. Die Drehung des Häckselrotors 2 treibt radial nach außen gerichtete Luftströme an, wobei ein Luftstrom 42 durch die Einlassöffnung der Zerkleinerungseinrichtung 17 der Flussrichtung des Strohanteils 16 entgegengesetzt ist und das Vordringen des Strohanteils 16 in die Zerkleinerungseinrichtung 17 behindert.

Zwischen dem Auslassbereich 19 und der Einlassöffnung der Zerkleinerungseinrichtung 17 erstreckt sich ein Kanal 22 im Wesentlichen vertikal, so dass der Strohanteil 16 über den Kanal 22 durch sein Eigengewicht angetrieben der Zerkleinerungseinrichtung 17 zustrebt. Die Breite des Kanals 22 in Querrichtung des Mähdreschers 1 entspricht der Länge des Häckselrotors 2 in Richtung der Achse 18. Um den Kanal 22 über seine Breite hinweg gleichmäßig mit dem Strohanteil 16 zu beaufschlagen, kann die Trenneinrichtung 14 mehrere, typischerweise zwei, Axialflussrotoren 13 nebeneinander umfassen.

In der Fahrtrichtung des Mähdreschers 1 ist der Kanal 22 durch ein hinteres und ein vorderes Leitblech 23 bzw. 24 begrenzt.

Das hintere Leitblech 23 erstreckt sich zwischen von einem hinteren Rand des Auslassbereichs 19 an der Trenneinrichtung 14 abwärts und ist an seinem unteren Rand mit dem Gehäuseabschnitt 25 verbunden, der sich konzentrisch zur Achse 18 um den Häckselrotor 2 erstreckt. Eine gedachte Linie 41, die sich durch den oberen und den unteren Rand des hinteren Leitblechs 23 und über dessen unteren Rand hinaus erstreckt, teilt den Kreis 21 in ein vorderes Segment, das die Achse 18 enthält, und ein hinteres Segment, dessen Segmenthöhe h wenigstens 10%, besser wenigstens 15% des Radius des Kreises 21 entspricht. So kann vermieden werden, dass der Kreis 21 und das hintere Leitblech 23 einen engen, spitzwinkligen Zwickel bilden, in dem ein von den rotierenden Häckselmessern 20 angetriebener starker aufwärts gerichteter Luftstrom das Schweben und die Klumpenbildung von Strohpartikeln begünstigt. Stattdessen liegt das hintere Leitblech 23 im Windschatten des Luftstroms 42, so dass nahe am hinteren Leitblech 23 auch leichte Partikel des Strohanteils 16 zum Häckselrotor 2 vordringen und von diesem erfasst werden können.

Das vordere Leitblech 24 erstreckt sich von einem vorderen Rand des Auslassbereichs 19 an der Trenneinrichtung 14 abwärts und geht an seinem unteren Rand in den Gehäuseabschnitt 26 über, der sich konzentrisch zur Achse 18 um einen vorderen unteren Quadranten des Häckselrotors 2 erstreckt. Vom Gehäuseabschnitt 26 radial nach innen vorspringende Gegenmesser 40 wirken mit den Häckselmessern 20 zusammen, um den über den Kanal 22 zugeführten Strohanteil 16 zu zerkleinern und einer Breitverteileinrichtung 27 zuzuleiten. Die Breitverteileinrichtung 24 dient zum Verstreuen des gehäckselten Strohanteils 16 in Breitenrichtung hinter dem Mähdrescher. Sie kann einen beliebigen an sich bekannten Aufbau haben und ist deswegen hier nicht eigens beschrieben.

Strohpartikel, die die Zerkleinerungseinrichtung zunächst hinter der Achse 18, nahe am hinteren Leitblech 23, erreichen, werden von den Häckselmessern 20 nach vorn und (in geringerem Maße) nach oben gegen das vordere Leitblech 24 geschleudert, gleiten an diesem nach unten und werden dann kontinuierlich von den Häckselmessern 20 erfasst und durch die Zerkleinerungseinrichtung 17 gezogen.

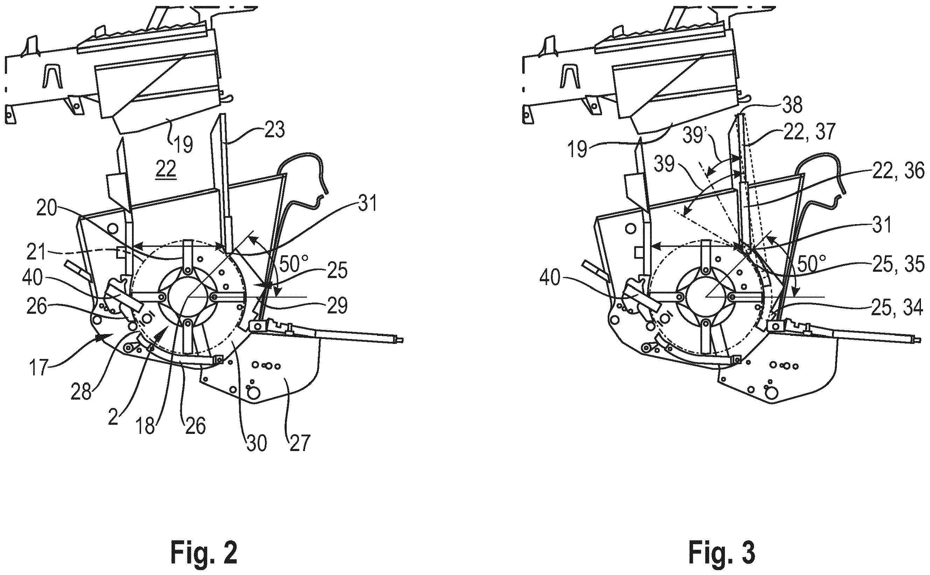

Fig. 2 zeigt einen vergrößerten Querschnitt durch die Zerkleinerungseinrichtung 17. Der Gehäuseabschnitt 25 bildet näherungsweise einen Kreisbogen, der sich von einem vertikalen Abschnitt 29 aus nach unten bis zum oberen Rand eines zur Breitverteileinrichtung 27 führenden Ausgangs 30 und nach oben über einen Bogen von 50° bis zur einer Oberkante 31 erstreckt, von der das hintere Leitblech 23 ausgeht. Eine Tangente, die den Gehäuseabschnitt 25 an seiner Oberkante 31 berührt, und das hintere Leitblech 23 spannen einen dem Kanal 22 und dem Häckselrotor 2 zugewandten Winkel auf, der bewirkt, dass das hintere Leitblech 23 im Windschatten des vom Häckselrotor 2 ausgehenden Luftstroms 42 liegt. Strohpartikel, die an dem hinteren Leitblech 23 geführt abwärts gleiten, erreichen somit die Zerkleinerungsvorrichtung 17 mit einer nichtverschwindenden Geschwindigkeit radial zur Achse 18, so dass sie in den Kreis 21 eindringen und von den Häckselmessern 20 erfasst werden.

Der Gehäuseabschnitt 26 ist hier von mehren in Umfangsrichtung des Kreises 21 aufeinanderfolgenden Segmenten gebildet. Eines dieser Segmente 28 kann gesteuert gegen den Häckselrotor 2 schwenkbar sein, um die Breite des Spalts zwischen den Häckselmessern 20 und dem Gehäuseabschnitt bzw. die Reibung zwischen dem betreffenden Segment und dem Stroh zu steuern und damit die Effizienz des Häckselvorgangs zu beeinflussen.

Einer weiteren Variante zufolge ist das hintere Leitblech 23 an der Oberkante 31 an den Gehäuseabschnitt 26 angelenkt und bei Stillstand des Häckselrotors 2 aus der in Fig. 2 gezeigten Stellung in eine in Fig. 1 gestrichelt dargestellte Stellung schwenkbar, in der ein oberer Rand des hinteren Leitblechs 23 an einer Schulter 32 des vorderen Leitblechs 23 anliegt. Der Zugang zur Zerkleinerungseinrichtung 17 ist so versperrt. Indem der Strohanteil 16 an einer Außenseite des hinteren Leitblechs 23 entlang abwärtsrutscht und unter Umgehung der Breitverteileinrichtung 27 zu Boden fällt, wird er hinter dem Mähdrescher 1 als Schwad abgelegt. Auch die Breitverteileinrichtung 27 kann in diesem Zustand, wie in Fig. 1 gestrichelt gezeigt, nach unten geschwenkt sein, um dem Strohanteil das Abgleiten an einer ebenen Oberseite 33 der Breitverteileinrichtung 27 zu erleichtern.

Im Falle der Fig. 3 umfasst der Gehäuseabschnitt 25 ein ortsfestes Segment 34 und ein mit Hilfe eines nicht dargestellten Stellgliedes in Umfangsrichtung des Häckselrotors 2 gegen das Segment 34 verschiebbares, die Oberkante 31 bildendes Segment 35, und das hintere Leitblech 23 umfasst teleskopisch gegeneinander verschiebbare Segmente 36, 37, von denen das untere 36 an die Oberkante 31 des Segments 35 und das obere 37 an die Trenneinrichtung 14 angelenkt ist. So kann das hintere Leitblech 23 jeweils passend zu einer Zu- oder Abnahme der Ausdehnung des Gehäuseabschnitts 25 kürzer oder länger werden und dabei um eine Achse 38 schwenken, die es mit dem Auslassbereich 19 verbindet. Das Leitblech 23 ist so verstellbar zwischen einer in Fig. 3 mit durchgezogenen Linien gezeichneten Stellung, in der ein Zwickel 39 zwischen dem Leitblech und dem Kreis 21 flach und weit offen ist, und der von der Drehung des Häckselrotors 2 angetriebene Luftstrom eine starke nach vorn gerichtete Geschwindigkeitskomponente hat, die den Strohanteil nach vorn ablenkt, und einer gestrichelt dargestellten Stellung, in der der Querschnitt des Kanals 22 groß ist, dafür aber der Zwickel 39' tief und eng ist und der Luftstrom eine im Wesentlichen nach oben gerichtete Geschwindigkeitskomponente hat, die Strohpartikel in dem Zwickel 39' in der Schwebe halten, diese aber kaum nach vorn ablenkt. Um einen jeweils optimalen Kompromiss einzustellen zwischen einem zugunsten eines ungehindertes Materialflusses möglichst großen Querschnitt des Kanals 22 und dem Wunsch, Klumpenbildung des Strohanteils am Zwickel zu vermeiden, kann eine Steuereinheit eingerichtet sein, das Stellglied jeweils abhängig von einer automatisch identifizierten oder von einem Benutzer eingegebenen Art oder Sorte des Ernteguts, einem an beliebiger geeigneter Stelle im Mähdrescher gemessenen Massenstrom eines der diversen oben beschriebenen Erntegutströme, dem Feuchtigkeitsgehalt des Ernteguts etc. einzustellen.

### Bezugszeichen

- 1: Mähdrescher
- 2: Häckselrotor
- 3: Schrägförderer
- 4: Erntegutstrom
- 5: Tangentialdreschwerk
- 6: intermediärer Erntegutstrom
- 7: Reinigungseinrichtung
- 8: Kornanteil (Erntegutstrom)
- 9: Spreuanteil (Erntegutstrom)
- 10: intermediärer Erntegutstrom
- 11: Dreschorgan
- 12: Dreschorgan
- 13: Axialflussrotor
- 14: Trenneinrichtung
- 15: Teilstrom
- 16: Strohanteil (Erntegutstrom)
- 17: Zerkleinerungseinrichtung
- 18: Achse
- 19: Auslassbereich
- 20: Häckselmesser
- 21: Kreis
- 22: Kanal
- 23: hinteres Leitblech
- 24: vorderes Leitblech
- 25: Gehäuseabschnitt
- 26: Gehäuseabschnitt
- 27: Breitverteileinrichtung
- 28: Segment
- 29: vertikaler Abschnitt
- 30: Ausgang
- 31: Oberkante
- 32: Schulter
- 33: Oberseite
- 34: Segment
- 35: Segment
- 36: Segment
- 37: Segment
- 38: Achse
- 39: Zwickel
- 40: Gegenmesser
- 41: Linie
- 42: Luftstrom

## Patentansprüche

1. Mähdrescher mit einer Trenneinrichtung (14) zum Trennen von Korn und Stroh und einer der Trenneinrichtung (14) nachgeordneten Zerkleinerungseinrichtung (17) zum Zerkleinern eines von der Trenneinrichtung (14) ausgegebenen Strohanteils (16), wobei die Zerkleinerungseinrichtung (17) einen Häckselrotor (2) umfasst, der um eine quer zu einer Eintrittsrichtung des Strohanteils (16) in die Zerkleinerungseinrichtung (17) orientierte Achse (18) drehangetrieben ist, und dessen Drehbewegung einen von dem Häckselrotor (2) weg gerichteten Luftstrom (42) erzeugt, wobei die Drehbewegung an einem Teil des Umfangs (21) des Häckselrotors (2) der Eintrittsrichtung entgegengesetzt ist, **dadurch gekennzeichnet, dass** die Eintrittsrichtung des Strohanteils (16) in die Zerkleinerungseinrichtung (17) in der Weise geregelt ist, dass der Luftstrom (42) dem Eintritt des Strohanteils (16) in die Zerkleinerungseinrichtung (17) nicht entgegenwirkt.

2. Mähdrescher nach Anspruch 1, **dadurch gekennzeichnet, dass** die Eintrittsrichtung durch ein einstellbares Gutleitblech (23) geregelt ist, das einen von der Trenneinrichtung (14) zur Zerkleinerungseinrichtung (17) verlaufenden Kanal (22) an einer Seite, insbesondere einer bezogen auf die Fahrtrichtung des Mähdreschers (1) hinteren Seite, begrenzt.

3. Mähdrescher nach Anspruch 2, **dadurch gekennzeichnet, dass** die Position des Gutleitblechs (23) abhängig von der Beschaffenheit des Häckselguts, der Drehzahl des Häckselrotors (2), einer Arbeitsgeschwindigkeit der Trenneinrichtung (14) und/oder einem Massenstrom geregelt ist.

4. Mähdrescher nach einem der vorhergehenden Ansprüche, **dadurch gekennzeichnet, dass** das Gutleitblech (23) um eine zur Achse (18) des Häckselrotors (2) parallele Achse (31) schwenkbar ist.

5. Mähdrescher nach Anspruch 1, **dadurch gekennzeichnet, dass** die Eintrittsrichtung durch ein zumindest während des Betriebs der Zerkleinerungsvorrichtung (17) starr positioniertes Gutleitblech (23) geregelt ist, das einen von der Trenneinrichtung (14) zur Zerkleinerungseinrichtung (17) verlaufenden Kanal (22) an einer Seite, insbesondere einer bezogen auf die Fahrtrichtung des Mähdreschers (1) hinteren Seite, begrenzt.

6. Mähdrescher nach einem der Ansprüche 2 bis 5, **dadurch gekennzeichnet, dass** der Kanal (22) auf einer zweiten Seite durch ein weiteres Leitblech (24) begrenzt ist.

7. Mähdrescher nach Anspruch 6, **dadurch gekennzeichnet, dass** der Abstand zwischen dem Gutleitblech (23) und dem weiteren Leitblech (24) zumindest zeitweilig kleiner als der Durchmesser des Häckselrotors (2), vorzugsweise um mindestens 20 % kleiner, ist.

8. Mähdrescher nach einem der vorhergehenden Ansprüche, **dadurch gekennzeichnet, dass** das Gutleitblech (23) sich über die gesamte Länge des Häckselrotors (2) erstreckt.

9. Mähdrescher nach einem der vorhergehenden Ansprüche, **dadurch gekennzeichnet, dass** das Gutleitblech (23) an einen zur Achse (18) des Häckselrotors (2) konzentrischen Gehäuseabschnitt (25) der Zerkleinerungseinrichtung (17) anschließt.

10. Mähdrescher nach Anspruch 9, **dadurch gekennzeichnet, dass** der Gehäuseabschnitt (25) an seinem am das Gutleitblech (23) angrenzenden Rand (31) eine Neigung von 30° bis 70°, vorzugsweise 40°-60° gegen die Vertikale aufweist.

11. Mähdrescher nach einem der vorhergehenden Ansprüche, **dadurch gekennzeichnet, dass** der Zerkleinerungseinrichtung (17) eine Breitverteileinrichtung (27) zum Ausbreiten des Häckselguts quer zur Fahrtrichtung nachgelagert ist und dass die Trenneinrichtung (12-14) ausgelegt ist, um neben dem Strohanteil (16) und einem Kornanteil (8) einen Spreuanteil (9) abzutrennen und den Spreuanteil (9) der Breitverteileinrichtung (27) unter Umgehung (28) der Zerkleinerungseinrichtung (17) zuzuführen.
